(19) Europäisches Patentamt
European Patent Office
Office européen des brevets

(11) EP 2 878 517 A1

(12) **EUROPEAN PATENT APPLICATION**

(43) Date of publication:
03.06.2015 Bulletin 2015/23

(51) Int Cl.:
*B62D 21/15* (2006.01)   *B60R 19/34* (2006.01)
*F16F 7/00* (2006.01)

(21) Application number: 14191529.8

(22) Date of filing: 03.11.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.11.2013 JP 2013248355

(71) Applicant: Toyota Jidosha Kabushiki Kaisha
Toyota-shi, Aichi 471-8571 (JP)

(72) Inventor: Mori, Takeo
Toyota-shi, Aichi 471-8571 (JP)

(74) Representative: Smith, Samuel Leonard
J A Kemp
14 South Square
Gray's Inn
London WC1R 5JJ (GB)

(54) **Vehicle body frame member**

(57) A vehicle body frame member has an impact absorbing portion 14, which is shaped like a rectangular tube and has four side walls 10,11,12,13 and a tube axis L. At least one of the four side walls has a row of protrusions configured by an odd number of protrusions 15, 16, 17 aligned in the direction of the tube axis. Each of the protrusions protrudes outward in a radial direction of the impact absorbing portion and extends along the side wall in a direction perpendicular to the tube axis. The protruding amount of the even-numbered protrusions h2 is greater than the protruding amount of the odd-numbered protrusions h1,h3.

Fig.1

Printed by Jouve, 75001 PARIS (FR)

**(Cont. next page)**

# Fig.3

**Description**

BACKGROUND OF THE INVENTION

The present invention relates to a vehicle body frame member having an impact absorbing portion that collapses to absorb impact energy.

Japanese Laid-Open Patent Publication No. 03-065634, for example, describes a vehicle body frame member such as a side member having an impact absorbing portion for absorbing impact energy. If the vehicle body receives impact, the impact absorbing portion collapses through buckling deformation to absorb the impact.

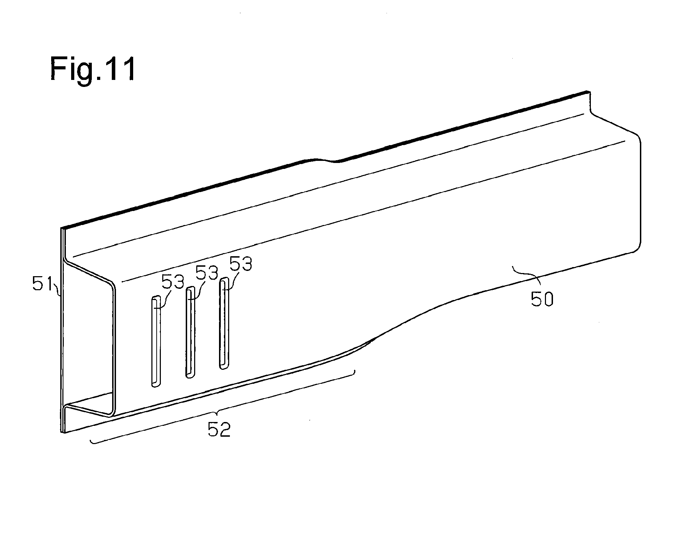

As shown in Fig. 11, the vehicle body frame member is formed by two plates, which are an inner panel 50 and an outer panel 51. The inner panel 50 has a channel-shaped cross section and has an opening facing outward in the width direction of the vehicle body. The outer panel 51 is shaped flat and has a thickness in the width direction of the vehicle body. An impact absorbing portion 52 is arranged in a portion of the vehicle body frame member at a front side in the vehicle body. The side wall of the impact absorbing portion 52 facing inward in the vehicle body has a plurality of beads 53, which extend in the up-down direction of the vehicle body and are spaced apart at uniform intervals. The beads 53 induce buckling deformation of the impact absorbing portion 52. This controls the buckling deformation of the impact absorbing portion 52 at the time of axial compressing deformation.

In the impact absorbing portion 52 of the vehicle body frame member, the pitch of the buckling deformation at the time of the axial compressing deformation is determined depending on the cross-sectional geometry of the impact absorbing portion 52. Accordingly, if the beads 53 are simply formed with a pitch smaller than the natural buckling pitch, which is determined depending on the cross-sectional geometry, the actual buckling pitch of the impact absorbing portion 52 will not decrease. Therefore, the deformation mode of the impact absorbing portion 52 can merely be controlled to a limited extent by forming the beads 53.

SUMMARY OF THE INVENTION

Accordingly, it is an objective of the present invention to provide a vehicle body frame member capable of controlling a deformation mode of an impact absorbing member at the time of axial compression in a further desirable manner.

To achieve the foregoing objective and in accordance with one aspect of the present invention, a vehicle body frame member is provided that includes an impact absorbing portion, which is shaped like a rectangular tube and has four side walls and a tube axis. At least one of the four side walls has a row of protrusions configured by an odd number of protrusions aligned in the direction of the tube axis. Each of the protrusions protrudes outward in a radial direction of the impact absorbing portion and extends along the side wall in a direction perpendicular to the tube axis. In the row of the protrusions, a protruding amount of even-numbered protrusions is greater than a protruding amount of the odd-numbered protrusions.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Fig. 1 is a perspective view showing a front side member of an embodiment of a vehicle body frame member;
Fig. 2 is an enlarged perspective view showing an impact absorbing portion of the front side member of Fig. 1;
Fig. 3 is a cross-sectional view taken along line III-III of Fig. 2;
Fig. 4 is an exploded perspective view showing the front side member of Fig. 1;
Fig. 5 is a cross-sectional view taken along line V-V of Fig. 2;
Fig. 6 is a perspective view showing a front side member of a comparative example having an impact absorbing portion with a flat side wall;
Figs. 7A to 7D are diagrams showing a manner of deformation of the front side member of the comparative example at the time of axial compressing deformation;
Figs. 8A to 8D are diagrams showing a manner of deformation of the front side member of Fig. 1 at the time of axial compressing deformation;
Fig. 9 is a graph representing the relationship between the load and the deformation amount in the front side members of Fig. 1 and the comparative example;
Fig. 10 is a cross-sectional view showing an impact absorbing portion of a modification of the front side member of Fig. 1; and
Fig. 11 is a perspective view showing a conventional vehicle body frame member.

DETAILED DESCRIPTION OF THE PREFERRED EMBODIMENTS

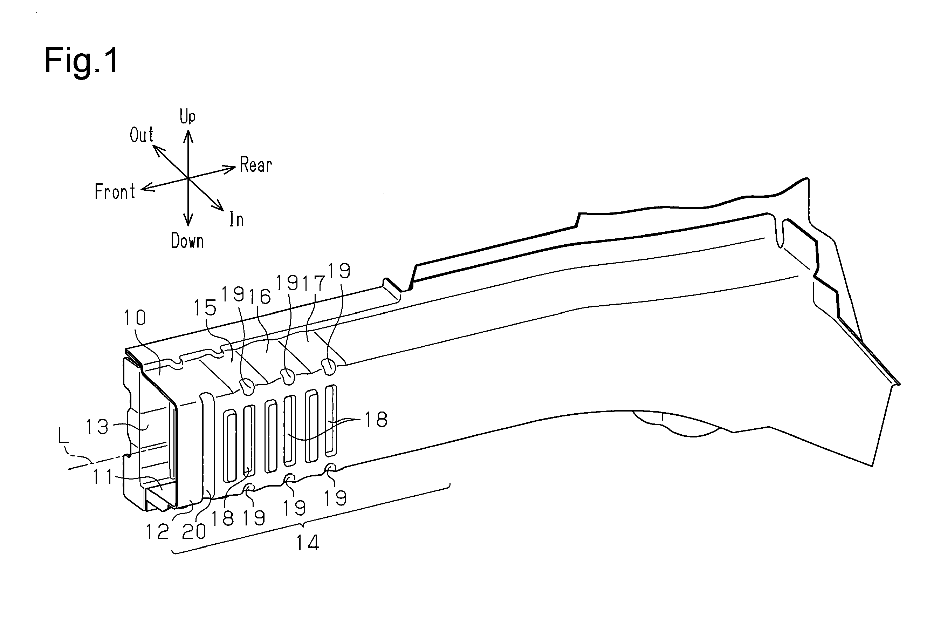

A vehicle body frame member according to one embodiment will now be described with reference to Figs. 1 to 8D.

Fig. 1 is a perspective view showing the configuration of a front side member serving as a vehicle body frame member of the present embodiment. The front side member is arranged on each lateral side of an engine compartment of a vehicle. The front side member illustrated in Fig. 1 is the front side member on the right side in the vehicle body. The front side member on the left side in the vehicle body is shaped laterally symmetrical with the front side member at the right side.

The front side member is shaped substantially like a rectangular tube extending in the front-rear direction of the vehicle body. The front side member has four walls, which are an upper wall 10 on an upper side in the vehicle body, a lower wall 11 on a lower side in the vehicle body, an inner wall 12 on an inner side in the vehicle body width direction, and an outer wall 13 on an outer side in the vehicle body width direction. An impact absorbing portion 14 is arranged in a portion of the front side member closer to the front end of the vehicle body. When receiving impact, the impact absorbing portion 14 collapses through buckling deformation to absorb impact energy.

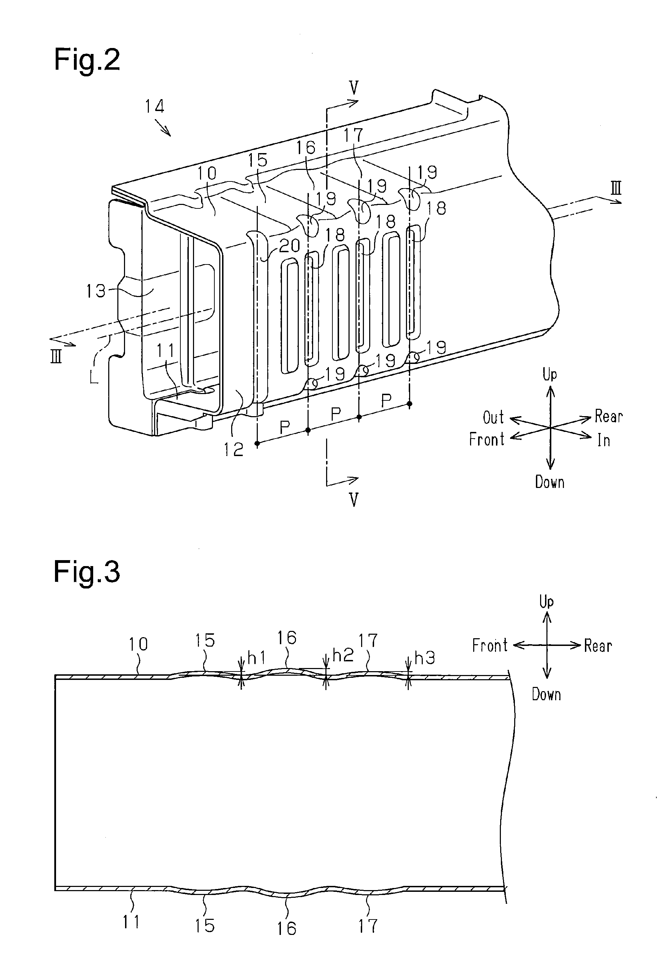

Fig. 2 is an enlarged perspective view showing the impact absorbing portion 14. The upper wall 10 has an odd number of (three) protrusions in a row of protrusions, which are a first protrusion 15, a second protrusion 16, and a third protrusion 17. The first to third protrusions 15 to 17 are aligned in the direction in which the tube axis L of the impact absorbing portion 14 extends (the tube axial direction). Each of the protrusions 15 to 17 protrudes outward in a radial direction of the impact absorbing portion 14, or, in other words, in a tube outward direction. The protrusions 15 to 17 are arranged along the upper wall 10 and extended each in a direction perpendicular to the tube axis L (in the vehicle body width direction). Although not illustrated in Fig. 2, the lower wall 11 of the impact absorbing portion 14 includes similar first, second, and third protrusions 15, 16, and 17, which are shaped symmetrical with those of the upper wall 10 in the up-down direction.

The protrusions 15 to 17 are spaced apart at equal intervals. The interval between each adjacent pair of the protrusions 15 to 17 (hereinafter, referred to as the forming pitch P of the protrusions) is determined using the expression (1), as will be described below, in correspondence with the cross-sectional geometry of the impact absorbing portion 14. In the expression (1), "H" is a value representing the dimension of the impact absorbing portion 14 in the up-down direction of the vehicle body. "W" is a value representing the dimension of the impact absorbing portion 14 in the vehicle body width direction, and "k" is a constant set to the range of 0.25 to 0.5, inclusive. The forming pitch P is set to a value approximately half the natural buckling pitch of the impact absorbing portion 14, which is determined depending on the cross-sectional geometry of the impact absorbing portion 14.

$$P = k \times (H + W) \ldots (1)$$

With reference to Fig. 3, the protruding amount h2 of the second protrusion 16 is greater than the protruding amount h1 of the first protrusion 15 and the protruding amount h3 of the third protrusion 17. In the front side member, the protruding amount h1 of the first protrusion 15 and the protruding amount h3 of the third protrusion 17 each correspond to 1% to 2 % of the value H representing the dimension of the impact absorbing portion 14 in the vehicle body up-down direction. In contrast, the protruding amount h2 of the second protrusion 16 corresponds to 2% to 4% of the representing value H and is approximately twice as great as each of the protruding amount h1 of the first protrusion 15 and the protruding amount h3 of the third protrusion 17.

As illustrated in Fig. 2, the inner wall 12 of the impact absorbing portion 14 has side wall beads 18, the number of which is equal to the number (three) of the protrusions in the row formed on the upper wall 10. Each one of the side wall beads 18 is arranged at the position in the tube axial direction corresponding to one of the three protrusions 15 to 17. Each side wall bead 18 protrudes inward in the radial direction of the impact absorbing portion 14, or, in other words, the tube inward direction, and extends along the inner wall 12 in a direction perpendicular to the tube axial direction (the vehicle body up-down direction). Notches 19, each of which is recessed inward in the radial direction of the impact absorbing portion 14, are formed in the boundary portion between the inner wall 12 and the upper wall 10 on an upper side of the side wall beads 18 in the vehicle body and in the boundary portion between the inner wall 12 and the lower wall 11 at a lower side of the side wall beads 18 in the vehicle body.

The inner wall 12 of the impact absorbing portion 14 has a vertical bead 20, which is formed at a position further forward than the foremost one of the side wall beads 18 in the vehicle body. The vertical bead 20 protrudes inward in a radial direction of the impact absorbing portion 14 and extends along the inner wall 12 in the vehicle body up-down direction. The vertical bead 20 extends across the boundary portion between the inner wall 12 and the upper wall 10 and the boundary portion between the inner wall 12 and the lower wall 11. The distance between the vertical bead 20 and the foremost side wall bead 18 in the vehicle body in the front-rear direction of the vehicle body is equal to the forming pitch P of the protrusions 15 to 17.

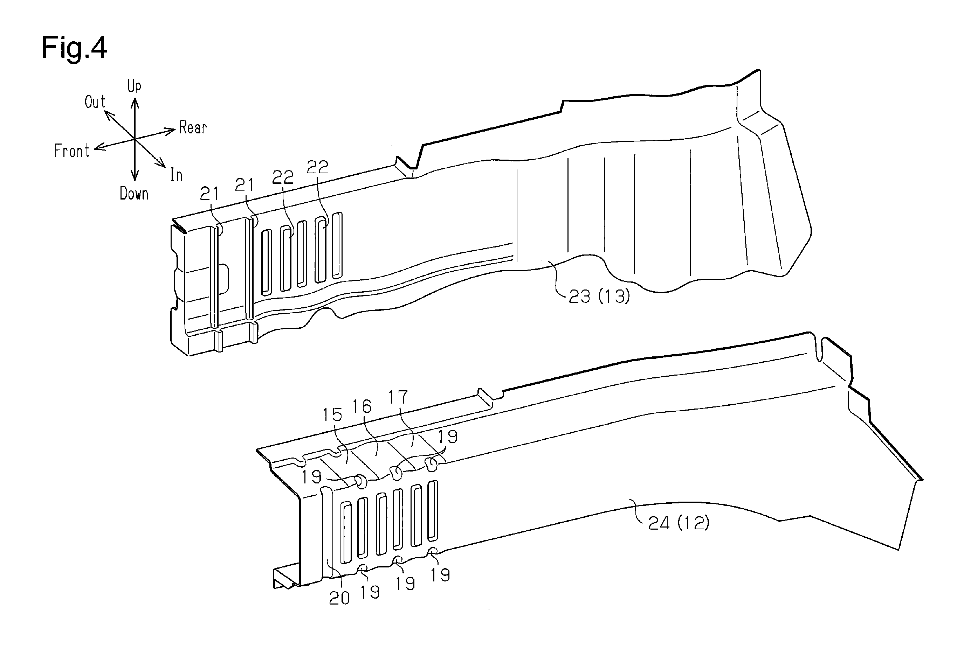

With reference to Fig. 4, the outer wall 13 of the impact absorbing portion 14 has side wall beads 22 each recessed inward in a radial direction of the impact absorbing portion 14. The side wall beads 22 are formed at positions in the tube axial direction corresponding to the second and third foremost ones of the side wall beads 18 of the inner wall 12 in the vehicle body. The outer wall 13 has vertical beads 21 projected radially outward, which are formed at the positions in the tube axial direction corresponding to the vertical bead 20 of the inner wall 12 and the foremost side wall bead 18 in the vehicle body.

The front side member is formed using two plates, which are an outer panel 23 serving as a first plate forming a portion at an outer side in the vehicle body and an inner panel 24 serving as a second plate forming a portion at an inner side in the vehicle body. The outer panel 23 and the inner panel 24 are joined together by welding, for example.

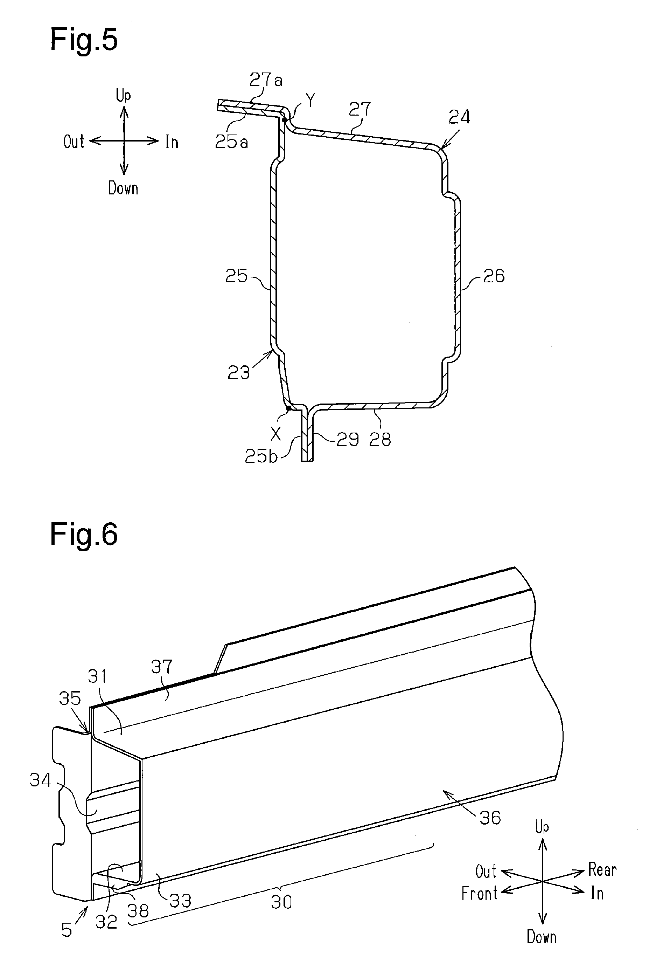

As illustrated in Fig. 5, the outer panel 23 has an outer wall portion 25 and a first flange portion 25a. The outer wall portion 25, which has a flat shape, forms the outer wall 13 of the impact absorbing portion 14. The first flange portion 25a extends outward in the vehicle width direction from the end of the outer wall portion 25 at an upper side in the vehicle body. An end zone 25b of the outer wall portion 25 located downward in the vehicle body is formed in a crank shape having a first portion and a second portion. The first portion extends inward in the vehicle body width direction from the lower end X of the outer wall 13 of the impact absorbing portion 14. The second portion extends downward in the vehicle body from the first portion.

The inner panel 24 includes a second flange portion 29 and three flat side wall portions, which are an inner wall portion 26, an upper wall portion 27, and a lower wall portion 28. The inner wall portion 26 forms the inner wall 12 of the impact absorbing portion 14. The upper wall portion 27 extends outward in the vehicle body from the end of the inner wall portion 26 located upward in the vehicle body, thus forming the upper wall 10 of the impact absorbing portion 14. The lower wall portion 28 extends outward in the vehicle body from the end of the inner wall portion 26 located downward in the vehicle body and forms the lower wall 11 of the impact absorbing portion 14.

An end zone 27a of the upper wall portion 27 at an outer side in the vehicle width direction is formed in a crank shape having a first portion and a second portion. The first portion extends upward in the vehicle body from the position Y, at which the upper wall 10 of the impact absorbing portion 14 meets the outer wall 13. The second portion extends outward in the vehicle body width direction from the first portion. The end zone 27a of the upper wall portion 27 at the outer side in the vehicle width direction is joined to the first flange portion 25a of the outer panel 23 at a position close to an end compared with the second portion, which is a portion outward in the vehicle body width direction compared with the second portion.

The second flange portion 29 of the inner panel 24 extends downward in the vehicle body from the end of the lower wall portion 28 on an outer side in the vehicle width direction. The aforementioned end zone 25b, which is located downward in the vehicle body, is joined to the second flange portion 29 at a position close to an end compared with the second portion of the end zone 25b, which is a position downward in the vehicle body compared with the second position.

In the present embodiment, the upper wall 10 of the impact absorbing portion 14 corresponds to a side wall A (a first side wall), and the outer wall 13 corresponds to a side wall B (a second side wall). The lower wall 11 corresponds to a side wall C (a third side wall), and the inner wall 12 corresponds to a side wall D (a fourth side wall). The upward direction in the vehicle body corresponds to direction a (a first direction) and the outward direction in the vehicle width direction corresponds to direction b (a second direction). The downward direction in the vehicle body corresponds to direction c (a third direction) and the inward direction in the vehicle width direction corresponds to direction d (a fourth direction). The outer wall portion 25 of the outer panel 23 corresponds to a first wall portion. The inner wall portion 26, the upper wall portion 27, and the lower wall portion 28 of the inner panel 24 correspond to a second wall portion, a third wall portion, and a fourth wall portion, respectively.

Operation of the front side member of the present embodiment will hereafter be described.

Fig. 6 shows the configuration of a front side member of a comparative example for the present embodiment. In the front side member of the comparative example, side walls of an impact absorbing portion 30, which are an upper wall 31, a lower wall 32, an inner wall 33, and an outer wall 34, are each formed without a protrusion extending in a direction perpendicular to the tube axis L of the impact absorbing portion 30 on the side wall. The front side member of the comparative example is formed using an outer panel 35 and an inner panel 36. The outer panel 35 has a flat shape and forms the outer wall 34. The inner panel 36 has a channel-shaped cross section and forms the upper wall 31, the lower wall 32, and the inner wall 33. The inner panel 36 also includes upper and lower flange portions 37, 38, which are each arranged at an outer side in the vehicle body width direction.

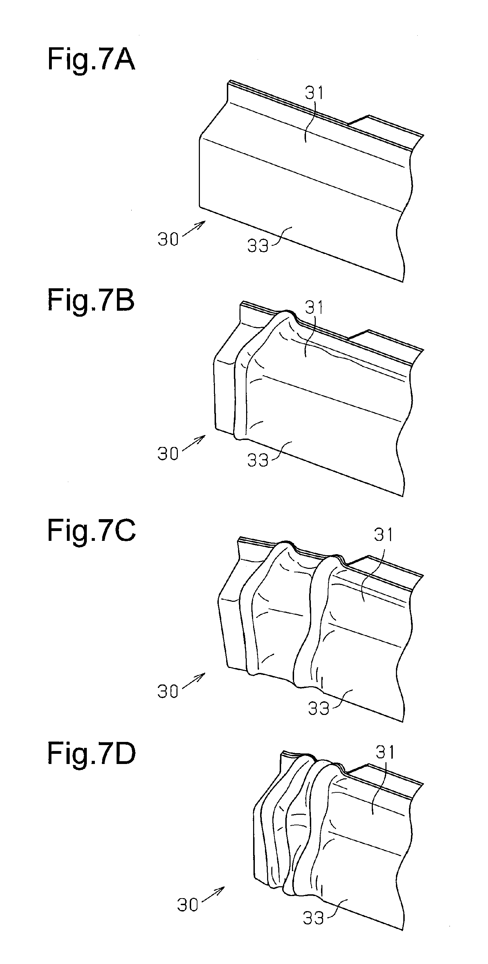

Figs. 7A to 7D illustrate a manner of deformation of the front side member of the comparative example at the time of axial compressing deformation. In the front side member of the comparative example, initial buckling deformation occurs as illustrated in Fig. 7B as axial compression continues. Then, with reference to Fig. 7C, subsequent buckling deformation is caused at the position spaced from the position of the initial buckling deformation by the distance corresponding to a buckling pitch, which is determined depending on the cross section geometry of the impact absorbing portion 30.

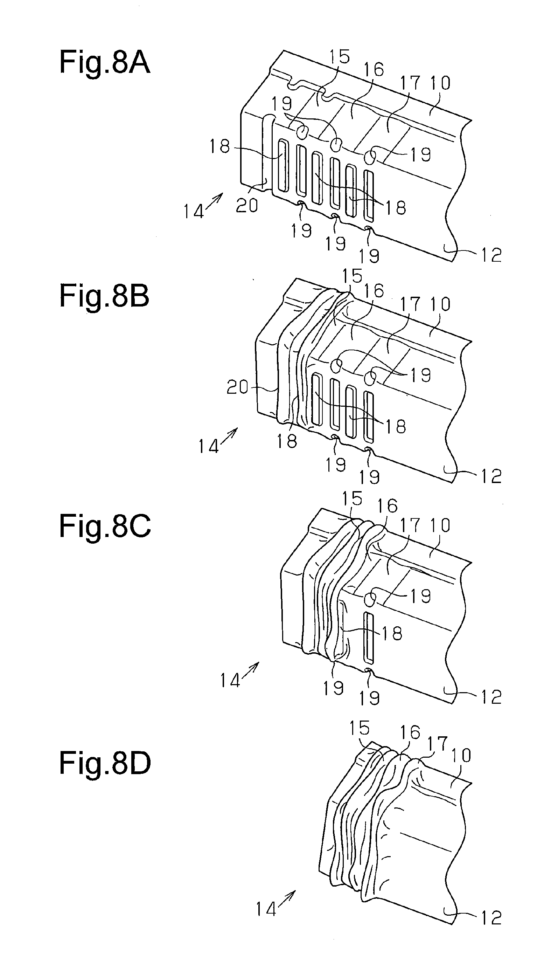

Figs. 8A to 8D illustrate a manner of deformation of the front side member of the present embodiment at the time of axial compressing deformation. In the front side member of the embodiment, initial buckling deformation of the impact absorbing portion 14 occurs at the position where the first protrusion 15 is formed, referring to Fig. 8B, as axial compression continues. The forming pitch for the protrusions 15 to 17 is half the buckling pitch determined depending on the cross-sectional geometry of the impact absorbing portion 30. Accordingly, subsequent buckling deformation would occur at a position beyond the position where the second protrusion 16 is formed, that is, at the position where the third protrusion 17 is formed, which is spaced from the first protrusion 15 corresponding to the initial buckling deformation by the distance corresponding to the buckling pitch determined depending on the cross-sectional geometry of the impact absorbing portion 30. However, in the present embodiment, the protruding amount h2 of the second protrusion 16 is greater than the protruding amount h1, h3 of the first and third protrusions 15, 17. This particularly increases effectiveness in induction of buckling deformation at the position where the second protrusion 16 is formed. As a result, as illustrated in Fig. 8C, the subsequent buckling deformation is caused at the position where the second protrusion 16 is formed. As axial compression further continues, a third cycle of buckling deformation occurs at the position where the third protrusion 17 with reference to Fig. 8D. In this manner, the buckling deformation of the front side member of the present embodiment is brought about by a pitch smaller than that in the case where the present embodiment is not applied.

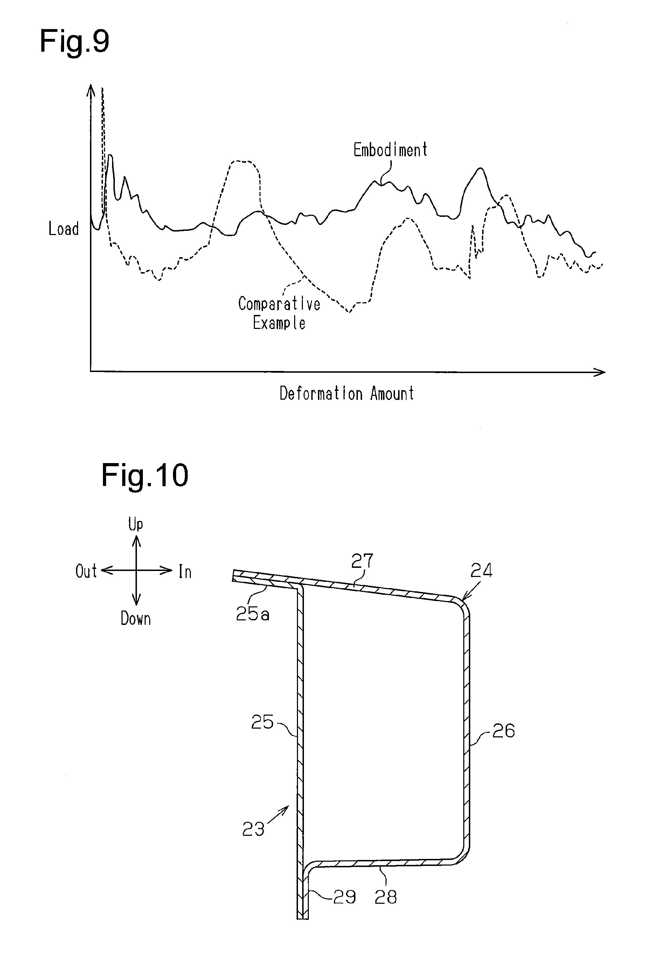

Fig. 9 represents the relationship between the deformation amount and the axial compression load for the front side members of the comparative example and the present embodiment. In the front side member of the present embodiment, in which the buckling deformation pitch is small compared with the front side member of the comparative example, buckling deformation occurs by a comparatively great number of cycles for an equal deformation amount. As a result, compared with the comparative example, the front side member of the present embodiment exhibits flat load-deformation characteristics with less fluctuation of the load.

The vehicle body frame member of the present embodiment has the advantages described below.

(1) The upper wall 10 and the lower wall 11 of the impact absorbing portion 14 each include a row of protrusions aligned in the tube axial direction of the impact absorbing portion 14, which are the three protrusions 15 to 17. Each of the protrusions 15 to 17 extends in a direction perpendicular to the tube axis L. The protruding amount h2 of the second protrusion 16, which is the even-numbered one (the second one) of the protrusions 15 to 17 as counted from the end of the impact absorbing portion 14, is greater than the protruding amount h1, h3 of each of the first and third protrusions 15, 17, which are the odd-numbered ones (the first and third ones) of the protrusions 15 to 17. This facilitates buckling deformation at a position where the buckling deformation would be difficult to occur, thus decreasing the buckling deformation pitch of the impact absorbing portion 14 at the time of axial compression. As a result, the buckling deformation of the impact absorbing portion 14 at the time of axial compression is controlled in a further desirable manner.

(2) The two opposed side walls (the upper wall 10 and the lower wall 11) of the impact absorbing portion 14 each include an odd number of protrusions 15 to 17, which induce buckling deformation. This further promotes the buckling deformation of the impact absorbing portion 14 at the positions where the protrusions 15 to 17 are formed.

(3) The inner wall 12 and the outer wall 13 have the recesses (the side wall beads 18, 22 and the vertical beads 20, 21) each extending in a direction perpendicular to the tube axis L of the impact absorbing portion 14. Each one of the recesses is arranged at the position in the tube axial direction corresponding to the corresponding one of the protrusions 15 to 17. The buckling deformation of the impact absorbing portion at the positions where the protrusions 15 to 17 are formed is thus further promoted.

(4) If a plate having a channel-shaped cross section and a flat plate form an impact absorbing portion, as in the cases of the comparative example of Fig. 6 and the conventional vehicle body frame member of Fig. 11, a great difference in strength against axial compression between the plates is likely to destabilize deformation responding to impact. However, in the present embodiment, the first flange portion 25a for joining the outer panel 23 to the inner panel 24 is arranged at the position spaced from the plane on which the upper wall 10 of the impact absorbing portion 14 is located. Also, the second flange portion 29 for the aforementioned joining is located at the position spaced from the plane on which the outer wall 13 of the impact absorbing portion 14 is located. Accordingly, the difference in strength against axial compression between the outer panel 23 and the inner panel 24 is comparatively small. As a result, deformation of the impact absorbing portion 14 at the time of axial compression is stabilized.

(5) The side wall beads 18, 22, the vertical beads 20, 21, and the notches 19 improve the rigidity of the portion of the front side member at the front side in the vehicle body against the load acting in the radial direction with respect to the tube axis L. This decreases bending deformation and curving deformation of the impact absorbing portion 14 caused by the load acting in a diagonal direction with respect to the tube axis. As a result, regardless of the direction in which the impact is applied, axial compressing deformation of the impact absorbing portion 14 occurs stably.

The above illustrated embodiment may be modified to the forms described below.

The outer panel 23 and the inner panel 24 may be formed to have a cross section shaped as illustrated in Fig. 10. In the example of the drawing, an end zone of the upper wall portion 27 of the inner panel 24 at an outer side in the vehicle body width direction has a flat shape continuous with the upper wall portion 27, instead of the crank shape of the above illustrated embodiment. Similarly, an end of the outer wall portion 25 of the outer panel 23 located downward in the vehicle body has a flat shape continuous with the outer wall portion 25. Also in this case, the outer panel 23 is not a simple flat plate and has a cross section including an angled portion at an upper side in the vehicle body. This decreases the difference in strength against axial compression between the outer panel 23 and the inner panel 24, compared with the comparative example of Fig. 6 and the conventional vehicle body frame member of Fig. 11. As a result, the impact absorbing portion 14 deforms with improved stability at the time of axial compression.

If destabilization of the axial compressing deformation of the impact absorbing portion 14 caused by the difference in strength between the outer panel 23 and the inner panel 24 does not cause a problem, the front side member may be formed using an inner panel having a channel-shaped cross section, such as one in the conventional vehicle body frame member, and an outer panel having a simple flat shape.

The front side member may be formed using a single component formed by extrusion, instead of the two plates.

As long as buckling deformation of the impact absorbing portion 14 is caused in a stable manner, some or all of the notches 19, which are formed in the boundary portion between the upper wall 10 and the inner wall 12 and the boundary portion between the lower wall 11 and the inner wall 12, may be omitted. Also, as long as the buckling deformation of the impact absorbing portion 14 occurs in a stable manner, some or all of the side wall beads 18, 22 and the vertical beads 20, 21 may be omitted.

Although the upper wall 10 and the lower wall 11 of the impact absorbing portion 14 both have the three protrusions 15 to 17 in the above illustrated embodiment, more protrusions may be employed. In this case, as long as the protruding amount of the even-numbered protrusions as counted from the end of the impact absorbing portion 14 is greater than the protruding amount of the odd-numbered protrusions, buckling deformation is brought about at a position where such buckling deformation would be difficult to occur. As a result, the buckling deformation pitch of the impact absorbing portion 14 at the time of axial compression decreases such that the buckling deformation is controlled in a desirable manner.

In the above illustrated embodiment, the upper wall 10 and the lower wall 11 of the impact absorbing portion 14 each include an odd number of protrusions. However, these protrusions may be arranged in the inner wall 12 and the outer wall 13 of the impact absorbing portion 14. In this case, the side wall beads 18, 22 and the vertical beads 20, 21 are arranged in the upper wall 10 and the lower wall 11 of the impact absorbing portion 14.

Although an odd number of protrusions are arranged in each of the two opposed side walls (the upper wall 10 and the lower wall 11) of the impact absorbing portion 14 in the above illustrated embodiment, the protrusions may be provided in only one of these side walls.

Although the impact absorbing portion 14 is arranged in the portion of the front side member at the front side in the vehicle body in the above illustrated embodiment, the impact absorbing portion 14 may be provided in any suitable portion other than the aforementioned portion.

An impact absorbing portion similar to the impact absorbing portion 14 of the front side member of the above illustrated embodiment may be arranged in any other suitable vehicle body frame member such as a rear side member. Also, a vehicle body frame member the entire portion of which is formed as an impact absorbing portion, or, in other words, a crush box, may have a configuration similar to the configuration of the impact absorbing portion 14 of the front side member.

## Claims

1. A vehicle body frame member comprising an impact absorbing portion, which is shaped like a rectangular tube and has four side walls and a tube axis, wherein at least one of the four side walls has a row of protrusions configured by an odd number of protrusions aligned in the direction of the tube axis,
   each of the protrusions protrudes outward in a radial direction of the impact absorbing portion and extends along the side wall in a direction perpendicular to the tube axis, and
   in the row of the protrusions, a protruding amount of even-numbered protrusions is greater than a protruding amount of the odd-numbered protrusions.

2. The vehicle body frame member according to claim 1, wherein the row of the protrusions is one of two rows that are each formed in two opposed ones of the four side walls.

3. The vehicle body frame member according to claim 1 or 2, wherein
   one of the four side walls that is continuous with the side wall having the row of the protrusions includes beads the number of which is equal to the number of the protrusions,
   each one of the beads is arranged at a position in the direction of the tube axis that corresponds to the corresponding one of the protrusions,
   each bead protrudes inward in a radial direction of the impact absorbing portion and extends along the side wall in a direction perpendicular to the tube axis.

4. The vehicle body frame member according to any one of claims 1 to 3, wherein
the four walls are first, second, third, and fourth side walls,
the first side wall has the row of the protrusions,
the third side wall is opposed to the first side wall,
the second and fourth side walls are each continuous with the first side wall,
the first side wall is spaced from the tube axis in a first direction,
the second side wall is spaced from the tube axis in a second direction,
the third side wall is spaced from the tube axis in a third direction,
the fourth side wall is spaced from the tube axis in a fourth direction,
the impact absorbing portion is formed by a first plate and a second plate,
the first plate includes a first wall portion forming the second side wall and a first flange portion extending in the second direction from an end in the first direction of the first wall portion, and
the second plate includes
a second wall portion forming the fourth side wall,
a third wall portion that extends in the second direction from an end in the first direction of the second wall portion to form the first side wall, wherein an end zone in the second direction of the third wall is joined to the first flange portion,
a fourth wall portion that extends in the second direction from an end in the third direction of the second wall portion to form the third side wall, and
a second flange portion that extends in the third direction from an end in the second direction of the fourth wall portion and is joined to an end zone in the third direction of the first wall portion.

5. The vehicle body frame member according to claim 4, wherein
the end zone in the second direction of the third wall portion is formed in a crank shape having a first portion extending in the first direction from the position at which the first side wall meets the second side wall and a second portion extending in the second direction from the first portion,
the end zone in the second direction of the third wall portion is joined to the first flange portion at a position closer to an end in the second direction of the third wall portion than to the second portion,
the end zone in the third direction of the first wall portion is formed in a crank shape having a first portion extending in the fourth direction from an end in the third direction of the second side and a second portion extending in the third direction from the first portion, and
the end zone in the third direction of the first wall portion is joined to the second flange portion at a position closer to an end in the third direction of the first wall portion than to the second portion.

# Fig.1

EP 2 878 517 A1

# Fig.2

# Fig.3

Fig.4

## Fig.5

## Fig.6

Fig.7A

31

30

33

Fig.7B

31

30

33

Fig.7C

31

30

33

Fig.7D

31

30

33

Fig.8A

Fig.8B

Fig.8C

Fig.8D

## Fig.9

## Fig.10

Fig.11

Europäisches
Patentamt

European
Patent Office

Office européen
des brevets

# EUROPEAN SEARCH REPORT

Application Number

EP 14 19 1529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2012 111374 A (TOYOTA MOTOR CORP) 14 June 2012 (2012-06-14) * the whole document * | 1-5 | INV. B62D21/15 B60R19/34 F16F7/00 |
| A,D | JP H03 65634 A (NISSAN MOTOR) 20 March 1991 (1991-03-20) * the whole document * | 1-5 | |
| A | JP H03 94137 A (NISSAN MOTOR) 18 April 1991 (1991-04-18) * the whole document * | 1-5 | |
| A | JP 2009 073420 A (TOYOTA MOTOR CORP) 9 April 2009 (2009-04-09) * the whole document * | 1-5 | |
| A | EP 1 331 160 A1 (NISSAN MOTOR [JP]) 30 July 2003 (2003-07-30) * the whole document * | 1-5 | |
| A | JP S63 110020 A (FUKAZAWA KAZUHITO) 14 May 1988 (1988-05-14) * the whole document * | 1-5 | TECHNICAL FIELDS SEARCHED (IPC) B62D B60R F16F |
| A | US 2008/054665 A1 (BACCOUCHE RIDHA [US] ET AL) 6 March 2008 (2008-03-06) * the whole document * | 1-5 | |
| A | DE 10 2006 022503 A1 (DECOMA GERMANY GMBH [DE]) 15 November 2007 (2007-11-15) * the whole document * | 1-5 | |

The present search report has been drawn up for all claims

| Place of search | Date of completion of the search | Examiner |
|---|---|---|
| The Hague | 17 April 2015 | Tiedemann, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

       .................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 19 1529

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2015

| Patent document cited in search report | | Publication date | Patent family member(s) | | Publication date |
|---|---|---|---|---|---|
| JP 2012111374 | A | 14-06-2012 | JP | 5533594 B2 | 25-06-2014 |
| | | | JP | 2012111374 A | 14-06-2012 |
| JP H0365634 | A | 20-03-1991 | JP | 2772401 B2 | 02-07-1998 |
| | | | JP | H0365634 A | 20-03-1991 |
| JP H0394137 | A | 18-04-1991 | JP | 2727680 B2 | 11-03-1998 |
| | | | JP | H0394137 A | 18-04-1991 |
| JP 2009073420 | A | 09-04-2009 | CA | 2700326 A1 | 26-03-2009 |
| | | | CN | 101801765 A | 11-08-2010 |
| | | | EP | 2190720 A1 | 02-06-2010 |
| | | | JP | 4367543 B2 | 18-11-2009 |
| | | | JP | 2009073420 A | 09-04-2009 |
| | | | KR | 20100051861 A | 18-05-2010 |
| | | | US | 2010201158 A1 | 12-08-2010 |
| | | | WO | 2009037537 A1 | 26-03-2009 |
| EP 1331160 | A1 | 30-07-2003 | DE | 60219275 T2 | 03-01-2008 |
| | | | EP | 1331160 A1 | 30-07-2003 |
| | | | US | 6705668 B1 | 16-03-2004 |
| JP S63110020 | A | 14-05-1988 | CA | 1305975 C | 04-08-1992 |
| | | | DE | 3771441 D1 | 22-08-1991 |
| | | | EP | 0266084 A2 | 04-05-1988 |
| | | | JP | H07115586 B2 | 13-12-1995 |
| | | | JP | S63110020 A | 14-05-1988 |
| | | | US | 5033593 A | 23-07-1991 |
| US 2008054665 | A1 | 06-03-2008 | CN | 101164818 A | 23-04-2008 |
| | | | DE | 102007042292 A1 | 27-03-2008 |
| | | | GB | 2441626 A | 12-03-2008 |
| | | | US | 2008054665 A1 | 06-03-2008 |
| DE 102006022503 | A1 | 15-11-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3065634 A